# EUROPEAN PATENT SPECIFICATION

(11) **EP 3 007 292 B1**
(45) Date of publication and mention of the grant of the patent: **18.12.2019**
(21) Application number: 13885947.5
(22) Date of filing: 31.05.2013
(51) Int. Cl.: H02H 3/04, H02B 1/24

(54) **INTERLOCK DISPLAY SYSTEM FOR BREAKER AND BREAKER**
VERRIEGELUNGSANZEIGESYSTEM FÜR SCHUTZSCHALTER UND SCHUTZSCHALTER
SYSTÈME D'AFFICHAGE DE VERROUILLAGE POUR DISJONCTEUR ET DISJONCTEUR

(43) Date of publication of application: 13.04.2016
(73) Proprietor: Mitsubishi Electric Corporation, Tokyo 100-8310 (JP)
(72) Inventor: MATSUDA Kazuhisa, Tokyo 102-0073 (JP)
(74) Representative: Diehl & Partner GbR
(86) International application number: PCT/JP2013/065157
(87) International publication number: WO 2014/192131

(56) References cited:
- CN-Y- 201 113 293
- JP-A- H0 946 894
- JP-A- H01 202 122
- JP-A- H04 503 148
- JP-A- H05 161 243
- JP-A- H09 130 974

## Description

### Technical Field

The invention relates to an interlock display system of a circuit breaker and a circuit breaker that is included in a plurality of groups, each of which is configured to include at least three circuit breakers which are electrically interlocked in a relative manner and an interlock device that sets matching patterns as interlock targets of the three circuit breakers.

### Background Art

As means of performing electrical interlocking between a plurality of circuit breakers, a method is known, in which an auxiliary contact provided in the circuit breaker and a voltage trip device or an undervoltage trip device are wired to a counterpart circuit breaker of the interlock (for example, see Patent Literature 1).

[Patent Literature 1] JP-UM-B-63-043703

Chinese utility model CN 201113293 Y discloses a circuit breaker operation device comprising a simulation panel, an operation panel and a circuit breaker control and communication device. The circuit breaker control and communication device is connected with a plurality of circuit breakers each having an operation indicator light. The circuit breaker control and communication device comprises a memory for storing a device status table including a status of the circuit breakers and an interlocking condition information table.

### Disclosure of Invention

### Technical Problem

In a case where another group of such a plurality of circuit breakers described above which are electrically interlocked, a problem arises in that it is difficult to determine which circuit breaker belongs to which interlock group.

In order to obtain a solution to such a problem described above, the invention aims at determining which circuit breaker belongs to which interlock group using an electrical display of a circuit breaker main body even when a plurality of groups exist, in which electrical interlocking is performed.

### Solution to Problem

The above object is solved by the combination of features of independent claim 1. Preferred embodiments are defined in the dependent claims.

In order to determine which circuit breaker belongs to which interlock group using an electrical display of a circuit breaker main body even when a plurality of groups exist, in which electrical interlocking is performed, an interlock display system of a circuit breaker according to the invention includes a plurality of groups, each of which is configured to include at least three circuit breakers which are electrically interlocked in a relative manner and an interlock device that sets matching patterns as interlock targets of the three circuit breakers, and a plurality of the interlock devices are connected with a wire between the groups. An interlock display section that displays a state of interlocking of the circuit breakers in the group thereof is provided for each of the circuit breakers. The type of pattern and the type of group are displayed on the interlock display section.

### Advantageous Effects of Invention

The interlock display system of the circuit breaker according to the invention includes the plurality of groups, each of which is configured to include at least three circuit breakers which are electrically interlocked in a relative manner and the interlock device that sets the matching patterns as the interlock targets of the three circuit breakers, and the plurality of interlock devices are connected with the wire between the groups. The interlock display section that displays the interlocked state of the circuit breakers in the group thereof is provided for each of the circuit breakers. The type of pattern and the type of group are displayed on the interlock display section. Thus, it is effective to find out which circuit breaker belongs to which interlock group using an electrical display of the circuit breaker main body even when a plurality of groups exist, in which the electrical interlock is performed.

### Brief Description of Drawings

[Fig. 1] Fig. 1 is a diagram showing a connection of an interlock device according to Embodiment 1 of the invention.
[Fig. 2] Fig. 2 is a diagram showing a trip relay unit of a circuit breaker according to Embodiment 1 of the invention.
[Fig. 3] Fig. 3 is a diagram showing an interlock display section of the trip relay unit of the circuit breaker according to Embodiment 1 of the invention.
[Fig. 4] Fig. 4 is a diagram showing a connection performed in a case where three interlock devices are used and a wire for a group sorting check is added, according to Embodiment 1 of the invention.
[Fig. 5] Fig. 5 is a diagram showing an internal circuit of the interlock device and the trip relay unit of the circuit breaker in a case where a pattern selector switch of the interlock device performs switching to a pattern 1, according to Embodiment 1 of the invention.
[Fig. 6] Fig. 6 is a diagram showing an internal circuit of the interlock device and the trip relay unit of the circuit breaker in a case where a pattern selector switch of the interlock device performs switching to a pattern 2, according to Embodiment 1 of the invention.
[Fig. 7] Fig. 7 is a diagram showing an internal circuit of the interlock device and the trip relay unit of the circuit breaker in a case where a pattern selector switch of the interlock device performs switching to a pattern 3, according to Embodiment 1 of the invention.
[Fig. 8] Fig. 8 is a diagram showing an internal circuit of the interlock device and the trip relay unit of the circuit breaker which are positioned on the left side in a case where the three interlock devices are used, the wire for the group sorting check is added, and the pattern selector switch of the interlock device performs switching to a pattern 1, according to Embodiment 1 of the invention.
[Fig. 9] Fig. 9 is a diagram showing an internal circuit of the interlock device and the trip relay unit of the circuit breaker which are positioned at the center in the case where the three interlock devices are used, the wire for the group sorting check is added, and the pattern selector switch of the interlock device performs switching to a pattern 1, according to Embodiment 1 of the invention.
[Fig. 10] Fig. 10 is an internal circuit diagram of the interlock device and the trip relay unit of the circuit breaker which are positioned on the right side in the case where the three interlock devices are used, the wire for the group sorting check is added, and the pattern selector switch of the interlock device performs switching to a pattern 1, according to Embodiment 1 of the invention.
[Fig. 11] Fig. 11 is an internal circuit diagram of a main body state display, an interlocked state, and a malfunction display unit of the interlock device and the trip relay unit of the circuit breaker in a case where the circuit breakers which are interlocked are all turned off, according to Embodiment 1 of the invention.
[Fig. 12] Fig. 12 is an internal circuit diagram of a main body state display, an interlocked state, and a malfunction display unit of the interlock device and the trip relay unit of the circuit breaker in a case where the left main body of the three circuit breakers which are interlocked is turned on, according to Embodiment 1 of the invention.
[Fig. 13] Fig. 13 is an internal circuit diagram of a main body state display, an interlocked state, and a malfunction display unit of the interlock device and the trip relay unit of the circuit breaker in a case where the center main body of the three circuit breakers which are interlocked is turned on, according to Embodiment 1 of the invention.
[Fig. 14] Fig. 14 is an internal circuit diagram of a main body state display, an interlocked state, and a malfunction display unit of the interlock device and the trip relay unit of the circuit breaker in a case where the right main body of the three circuit breakers which are interlocked is turned on, according to Embodiment 1 of the invention.
[Fig. 15] Fig. 15 is a diagram showing a pattern selector unit of the interlock device, which is configured to include a multi-circuit rotary switch, according to Embodiment 1 of the invention.
[Fig. 16] Fig. 16 is a diagram showing a pattern selector unit of an interlock device, which is configured to include three types of connectors, according to Embodiment 2 of the invention.

### Best Mode for Carrying Out the Invention

### Embodiment 1

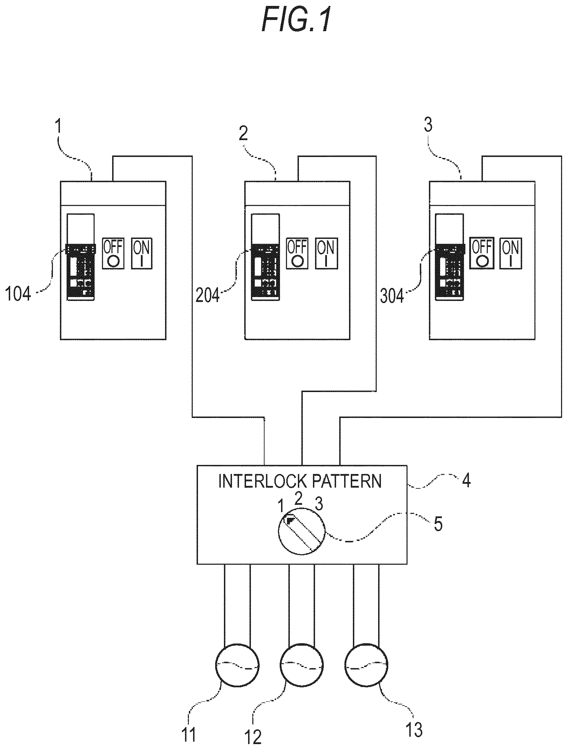

Fig. 1 is a diagram showing a connection between three circuit breakers of a circuit breaker 1, a circuit breaker 2, and a circuit breaker 3 to an interlock device 4 according to Embodiment 1 of the invention.

In Fig. 1, a power source 11 means a power source which causes an undervoltage trip device and an interlock display circuit of the circuit breaker 1 to operate, a power source 12 means a power source which causes an undervoltage trip device and an interlock display circuit of the circuit breaker 2 to operate, and a power source 13 means a power source which causes an undervoltage trip device and an interlock display circuit of the circuit breaker 3 to operate.

The undervoltage trip device means a device which turns off and locks the circuit breaker until a voltage is applied to the circuit breaker and thus, the three circuit breakers can be interlocked by connecting the undervoltage trip device of the circuit breaker to the interlock device 4.

A pattern selector switch 5 that switches interlock patterns is attached to the interlock device 4.

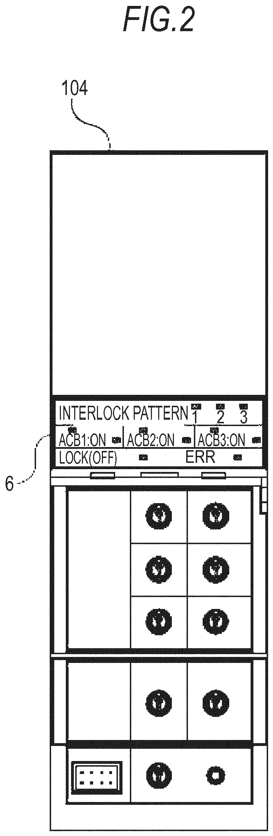

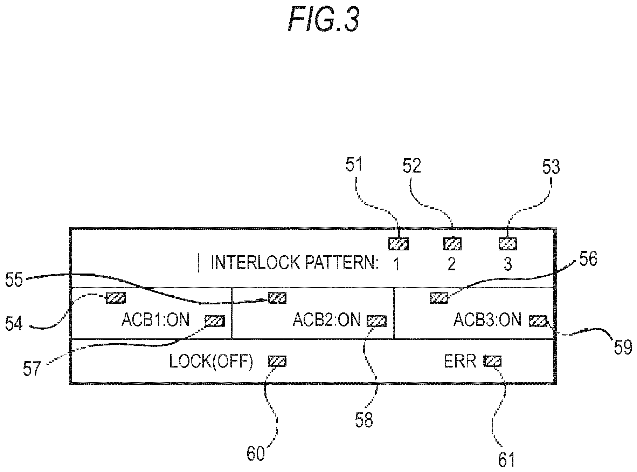

A trip relay that detects an overcurrent and causes a main contact of the circuit breaker to open the circuit is attached to the circuit breaker and an interlock display section 6 is provided in each of a trip relay 104 of the circuit breaker 1, a trip relay 204 of the circuit breaker 2, and a trip relay 304 of the circuit breaker 3, as shown in Fig. 2. Fig. 3 is a diagram showing the interlock display section 6 in Fig. 2 in detail and the interlock display section 6 includes interlock pattern displays 51, 52, and 53, corresponding interlock main body displays 54, 55, and 56, circuit breaker main body-on displays 57, 58, and 59, an interlock operation display 60, and an interlock malfunction display 61.

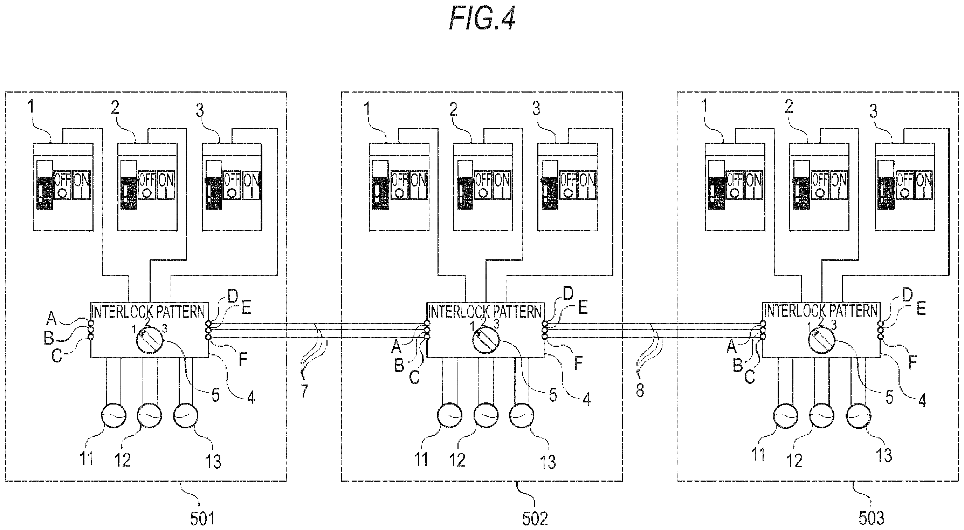

Fig. 4 is a diagram in a case of three groups 501, 502, and 503 in which three circuit breakers are interlocked. Terminals D, E, and F of an interlock device 4 of the group 501 is connected to terminals A, B, and C of an interlock device 4 of the group 502 through wires 7 and terminals D, E, and F of the interlock device 4 of the group 502 is connected to terminals A, B, and C of an interlock device 4 of the group 503 through wires 8. Accordingly, a circuit configuration is employed, in which emission colors of LEDs in the pattern displays 51, 52, and 53 in Fig. 3 are different for each of the groups 501, 502, and 503 and thereby, it is possible to determine which circuit breaker belongs to which group.

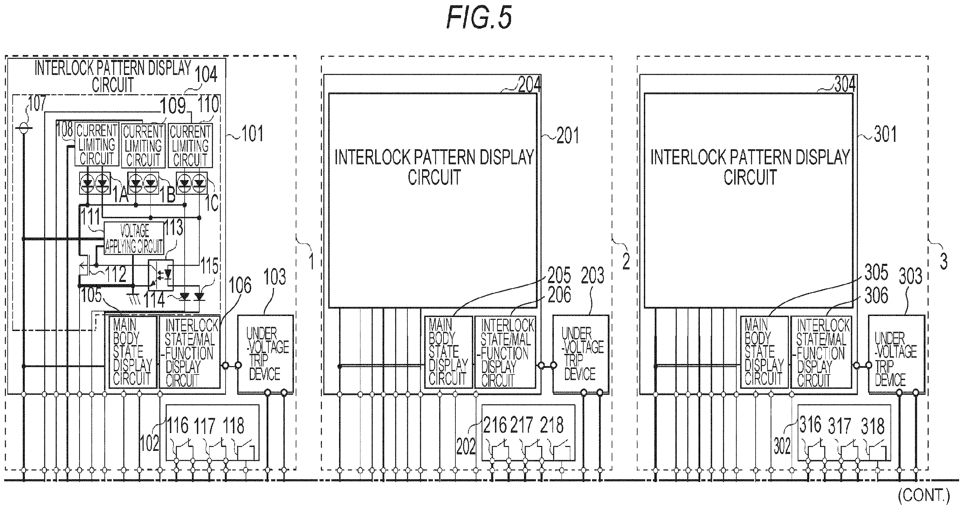

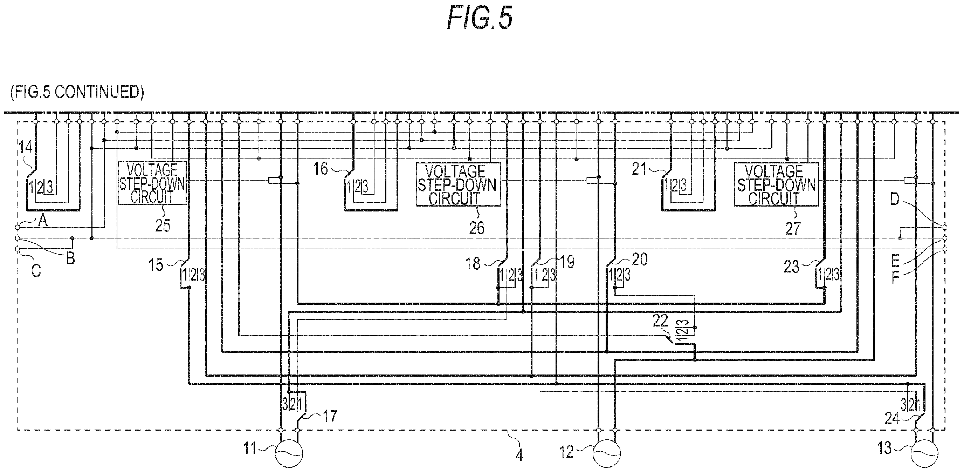

In a case where the pattern selector switch 5 of the interlock device 4 shown in Fig. 1 performs switching to pattern 1, the circuit breaker 2 functions as a circuit breaker for a bus tie, the circuit breaker 3 is turned off and locked in a case where the circuit breaker 1 and the circuit breaker 2 are turned on, and the circuit breaker 1 is turned off and locked in a case where the circuit breaker 2 and the circuit breaker 3 are turned on. In addition, in a case where the circuit breaker 1 and the circuit breaker 3 are turned on, the interlock pattern causes the circuit breaker 2 to be turned off and locked. Fig. 5 is an internal circuit diagram of the interlock device and the circuit breaker in a case where the pattern selector switch 5 of the interlock device 4 performs switching to the pattern 1. Switches 14 to 24 in Fig. 5 have a structure in which the switches are linked to the switching of the pattern selector switch 5 shown in Fig. 1 and are switched to the same pattern. Thick lines in Fig. 5 represent paths through which current flows in a state in which the circuit breaker 1, the circuit breaker 2, and the circuit breaker 3 are turned off. Switches 116 and 117 of an auxiliary switch 102, switches 216 and 217 of an auxiliary switch 202, and switches 316 and 317 of an auxiliary switch 302 are switches of a b contact and are turned off when the circuit breakers are turned on. In addition, switches 118, 218, and 318 are switches of an a contact and are turned on when the circuit breakers are turned on. A parallel circuit of the switch 116 of the auxiliary switch 102 of the circuit breaker 1 with the switch 217 of the auxiliary switch 202 of the circuit breaker 2 is positioned between an undervoltage trip device 303 of the circuit breaker 3 and the power source 13 such that both the switch 116 and the switch 217 are turned off in a case where the circuit breaker 1 and the circuit breaker 2 are turned on. Thus, power supply to the undervoltage trip device 303 of the circuit breaker 3 is cut off and the circuit breaker 3 is turned off and locked. A parallel circuit of the switch 216 of the auxiliary switch 202 of the circuit breaker 2 with the switch 316 of the auxiliary switch 302 of the circuit breaker 3 is positioned between an undervoltage trip device 103 of the circuit breaker 1 and the power source 11 such that both the switch 216 and the switch 316 are turned off in a case where the circuit breaker 2 and the circuit breaker 3 are turned on. Thus, power supply to the undervoltage trip device 103 of the circuit breaker 1 is cut off and the circuit breaker 1 is turned off and locked. A parallel circuit of the switch 117 of the auxiliary switch 102 of the circuit breaker 1 with the switch 317 of the auxiliary switch 302 of the circuit breaker 3 is positioned between an undervoltage trip device 203 of the circuit breaker 2 and the power source 12 such that both the switch 117 and the switch 317 are turned off in a case where the circuit breaker 1 and the circuit breaker 3 are turned on. Thus, power supply to the undervoltage trip device 203 of the circuit breaker 2 is cut off and the circuit breaker 2 is turned off and locked.

LEDs 1A, 1B, and 1C of an interlock pattern display circuit 104 are LEDs having two elements and the left element emits green light when applying current and the right element emits red light when applying current. In addition, both elements emit orange light which is produced by mixing the two colors when applying current to both elements . A power source 107 of the interlock pattern display circuit 104 of the trip relay 101 of the circuit breaker 1 is connected to a voltage applying circuit 111 and applies a gate voltage such that an FET (that is, a field-effect transistor) 112 is turned on. Since the FET 112 is turned on, current flows to the left element of the LED 1A from the power source 107 through a current limiting circuit 108 and the left element emits green light.

An interlock pattern display circuit 204 of the trip relay 201 of the circuit breaker 2 and an interlock pattern display circuit 304 of the trip relay 301 of the circuit breaker 3 have the same circuit configuration such that the LED 1A emits green light.

The LED 1A corresponds to an LED 51 in Fig. 3 and the LED 51 emits green light such that it is found out that the interlock pattern is the pattern 1.

Main body state display circuits 105, 205, and 305 and interlock state/malfunction display circuits 106, 206, and 306 are described below.

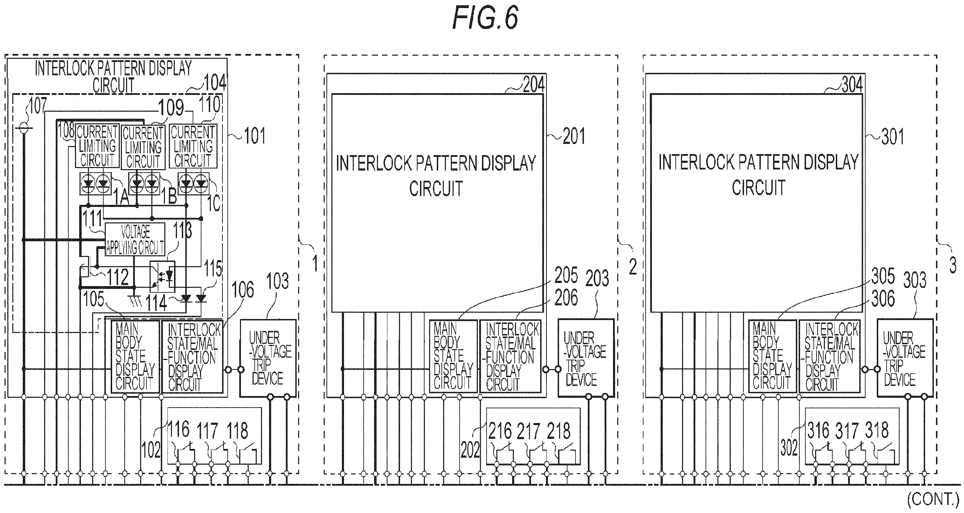

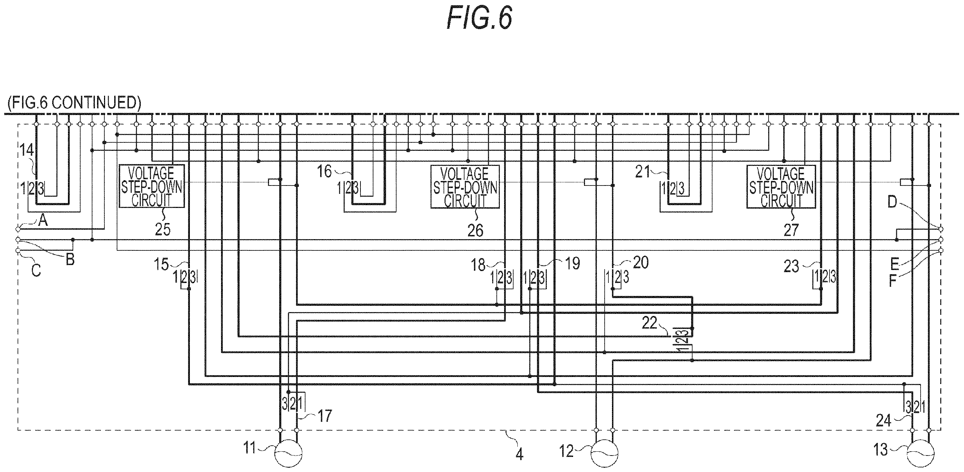

In a case where the pattern selector switch 5 of the interlock device 4 shown in Fig. 1 performs switching to pattern 2, the circuit breaker 1, the circuit breaker 2, and the circuit breaker 3 function as different circuit breakers for power supply, the circuit breaker 2 and the circuit breaker 3 are turned off and locked in a case where the circuit breaker 1 is turned on, and the circuit breaker 1 and the circuit breaker 3 are turned off and locked in a case where the circuit breaker 2 is turned on. In addition, in a case where the circuit breaker 3 is turned on, the interlock pattern causes the circuit breaker 1 and the circuit breaker 2 to be turned off and locked. Fig. 6 is an internal circuit diagram of the interlock device and the circuit breaker in a case where the pattern selector switch 5 of the interlock device 4 performs switching to the pattern 2. Thick lines in Fig. 6 represent paths through which current flows in a state in which the circuit breaker 1, the circuit breaker 2, and the circuit breaker 3 are turned off. A series circuit of the switch 216 of the auxiliary switch 202 of the circuit breaker 2 with the switch 316 of the auxiliary switch 302 of the circuit breaker 3 is positioned between the undervoltage trip device 103 of the circuit breaker 1 and the power source 11 such that the switch 216 is turned off in a case where the circuit breaker 2 is turned on and the switch 316 is turned off in a case where the circuit breaker 3 is turned on. Thus, in a case where one of the circuit breaker 2 or the circuit breaker 3 is turned on, power supply to the undervoltage trip device 103 of the circuit breaker 1 is cut off and the circuit breaker 1 is turned off and locked. A series circuit of the switch 117 of the auxiliary switch 102 of the circuit breaker 1 with the switch 317 of the auxiliary switch 302 of the circuit breaker 3 is positioned between the undervoltage trip device 203 of the circuit breaker 2 and the power source 12 such that the switch 117 is turned off in a case where the circuit breaker 1 is turned on and the switch 317 is turned off in a case where the circuit breaker 3 is turned on. Thus, in a case where one of the circuit breaker 1 or the circuit breaker 3 is turned on, power supply to the undervoltage trip device 203 of the circuit breaker 2 is cut off and the circuit breaker 2 is turned off and locked. A series circuit of the switch 116 of the auxiliary switch 102 of the circuit breaker 1 with the switch 217 of the auxiliary switch 202 of the circuit breaker 2 is positioned between the undervoltage trip device 303 of the circuit breaker 3 and the power source 13 such that the switch 116 is turned off in a case where the circuit breaker 1 is turned on and the switch 217 is turned off in a case where the circuit breaker 2 is turned on. Thus, in a case where one of the circuit breaker 1 or the circuit breaker 2 is turned on, power supply to the undervoltage trip device 303 of the circuit breaker 3 is cut off and the circuit breaker 3 is turned off and locked.

The power source 107 of the interlock pattern display circuit 104 of the trip relay 101 of the circuit breaker 1 is connected to a voltage applying circuit 111 and applies the gate voltage such that the FET 112 is turned on. Since the FET 112 is turned on, current flows to the left element of the LED 1B from the power source 107 through a current limiting circuit 109 and the left element emits green light.

The interlock pattern display circuit 204 of the trip relay 201 of the circuit breaker 2 and the interlock pattern display circuit 304 of the trip relay 301 of the circuit breaker 3 have the same circuit configuration such that the LED 1B emits green light.

The LED 1B corresponds to an LED 52 in Fig. 3 and the LED 52 emits green light such that it is found out that the interlock pattern is the pattern 2.

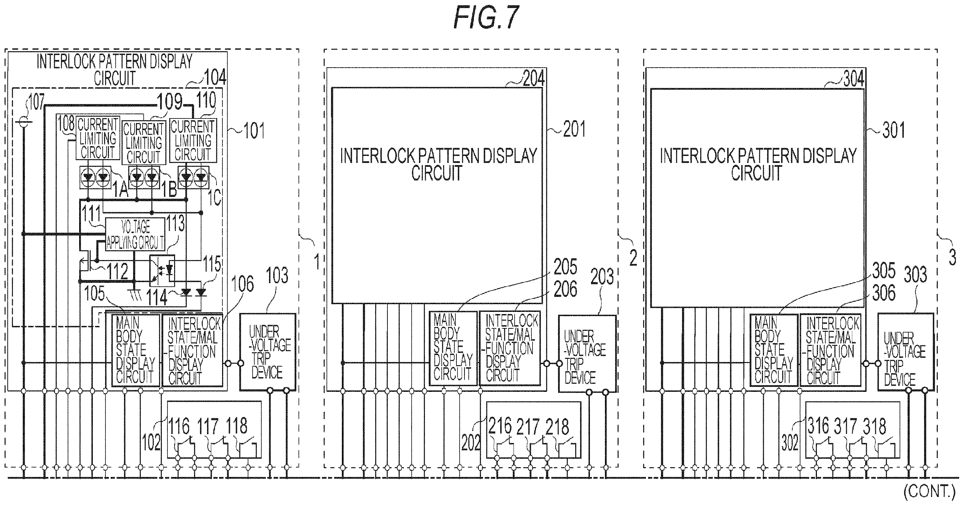

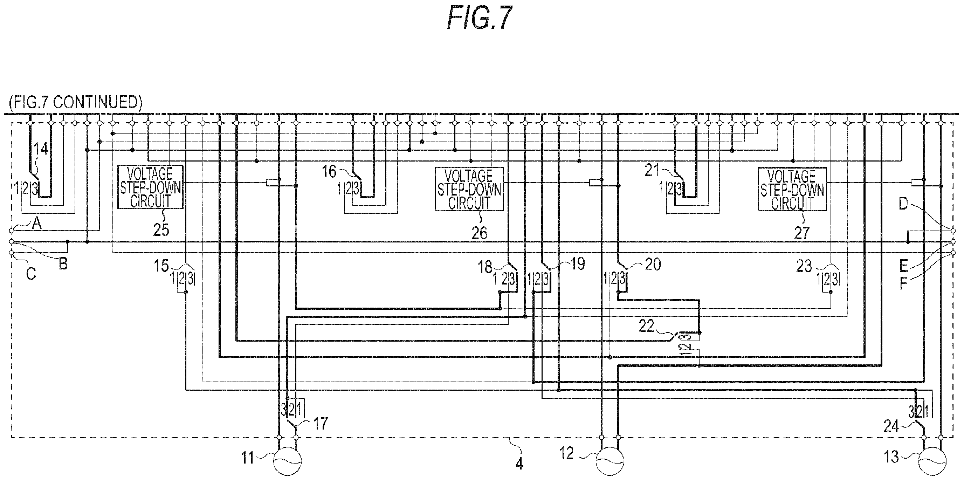

In a case where the pattern selector switch 5 of the interlock device 4 shown in Fig. 1 performs switching to pattern 3, the circuit breaker 2 functions as a circuit breaker for emergency power supply and the circuit breaker 1 and the circuit breaker 3 are turned off and locked in a case where the circuit breaker 2 is turned on. In addition, in a case where one or both of the circuit breaker 1 and the circuit breaker 3 are turned on, the interlock pattern causes the circuit breaker 2 to be turned off and locked. Fig. 7 is an internal circuit diagram of the interlock device and the circuit breaker in a case where the pattern selector switch 5 of the interlock device 4 performs switching to the pattern 3. Thick lines in Fig. 7 represent paths through which current flows in a state in which the circuit breaker 1, the circuit breaker 2, and the circuit breaker 3 are turned off. The switch 216 of the auxiliary switch 202 of the circuit breaker 2 is positioned between the undervoltage trip device 103 of the circuit breaker 1 and the power source 11 such that the switch 216 is turned off in a case where the circuit breaker 2 is turned on and power supply to the undervoltage trip device 103 of the circuit breaker 1 is cut off and the circuit breaker 1 is turned off and locked. The switch 217 of the auxiliary switch 202 of the circuit breaker 2 is positioned between the undervoltage trip device 303 of the circuit breaker 3 and the power source 13 such that the switch 217 is turned off in a case where the circuit breaker 2 is turned on and power supply to the undervoltage trip device 303 of the circuit breaker 3 is cut off and the circuit breaker 3 is turned off and locked. A series circuit of the switch 117 of the auxiliary switch 102 of the circuit breaker 1 with the switch 317 of the auxiliary switch 302 of the circuit breaker 3 is positioned between the undervoltage trip device 203 of the circuit breaker 2 and the power source 12 such that the switch 117 is turned off in a case where the circuit breaker 1 is turned on and the switch 317 is turned off in a case where the circuit breaker 3 is turned on. Thus, in a case where one or both of the circuit breaker 1 and the circuit breaker 3 are turned on, power supply to the undervoltage trip device 203 of the circuit breaker 2 is cut off and the circuit breaker 2 is turned off and locked.

The power source 107 of the interlock pattern display circuit 104 of the trip relay 101 of the circuit breaker 1 is connected to a voltage applying circuit 111 and applies the gate voltage such that the FET 112 is turned on. Since the FET 112 is turned on, current flows to the left element of the LED 1C from the power source 107 through a current limiting circuit 110 and the left element emits green light.

The interlock pattern display circuit 204 of the trip relay 201 of the circuit breaker 2 and the interlock pattern display circuit 304 of the trip relay 301 of the circuit breaker 3 have the same circuit configuration such that the LED 1C emits green light.

The LED 1C corresponds to an LED 53 in Fig. 3 and the LED 53 emits green light such that it is found out that the interlock pattern is the pattern 3.

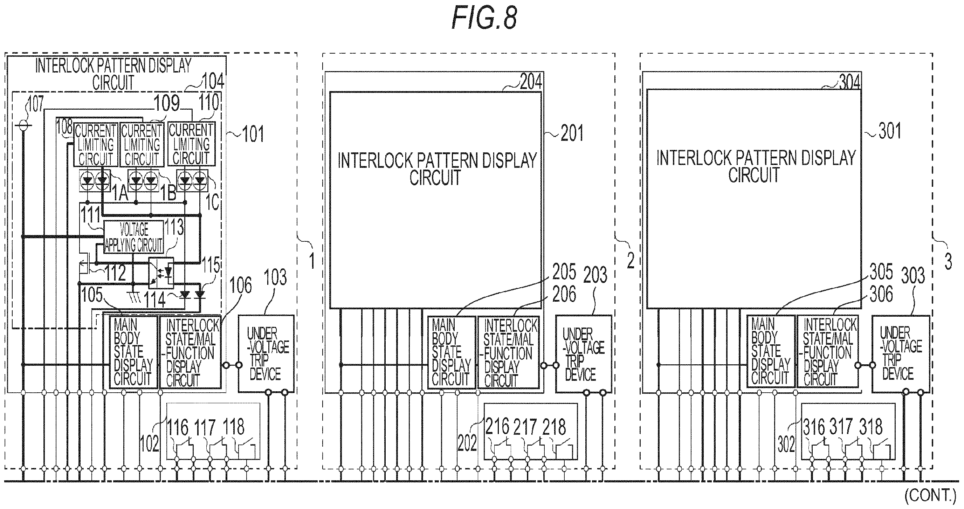

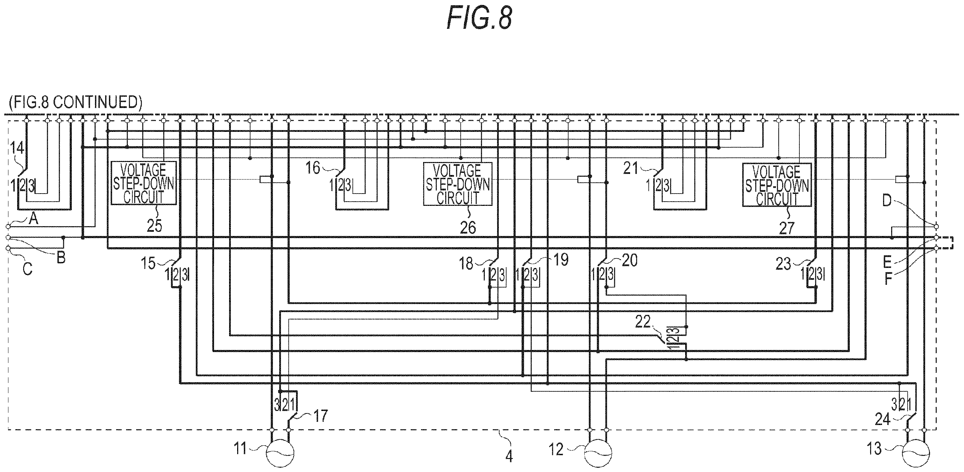

Fig. 8 is an internal circuit diagram of the interlock device and the circuit breakers of the group 501 in a case where the three groups 501, 502, and 503 exist, in which three circuit breakers are interlocked, as shown in Fig. 4.

Since the terminal E and the terminal F of the interlock device 4 of the group 501 are connected to the terminal B and the terminal C of the group 502, the terminal E and the terminal F are short-circuited as shown in Fig. 8. Current flows from the power source 107 of the interlock pattern display circuit 104 of the trip relay 101 of the circuit breaker 1 through the current limiting circuit 108, a photo coupler 113, and a diode 115 to the right element of the LED 1A, and the right element emits red light. In addition, the power source 107 is also connected to the voltage applying circuit 111 and applies the gate voltage such that the FET 112 is turned on. However, a current is applied to the light emitting side of the photo coupler 113, the photo coupler 113 enters into an ON state such that a short circuit occurs between a collector and an emitter, no voltage is applied to a gate of the FET 112, and the FET 112 is turned off. In this manner, since no current flows through the left element of the LED 1A, the LED 1A emits red light. The diode 115 prevents malfunction due to a reverse voltage applied to diodes on the light emitting side of the LEDs 1A, 1B, and 1C and the photo coupler 114.

The interlock pattern display circuit 204 of the trip relay 201 of the circuit breaker 2 and the interlock pattern display circuit 304 of the trip relay 301 of the circuit breaker 3 have the same circuit configuration such that the LED 1A emits red light.

The LED 1A corresponds to the LED 51 in Fig. 3 and the LED 51 emits red light such that it is found out that the interlock pattern is the pattern 1 and belongs to the group 501.

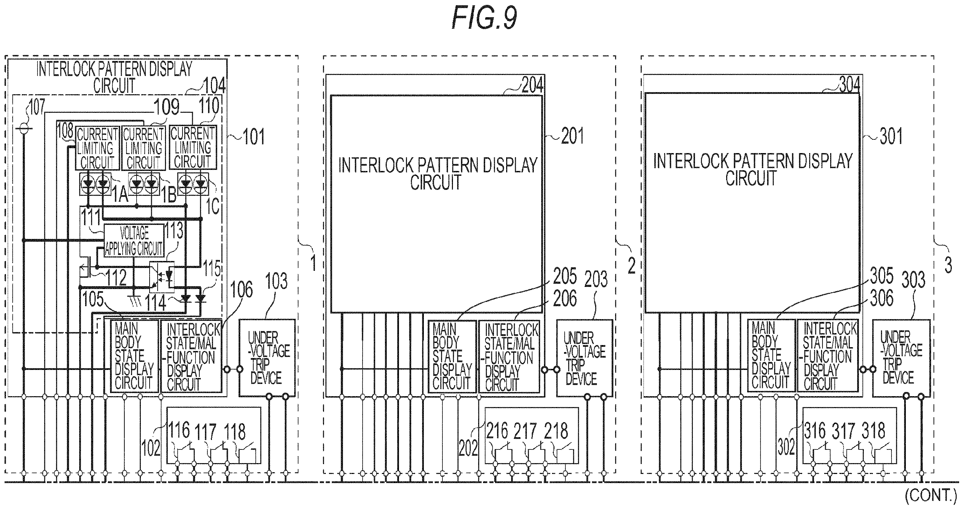

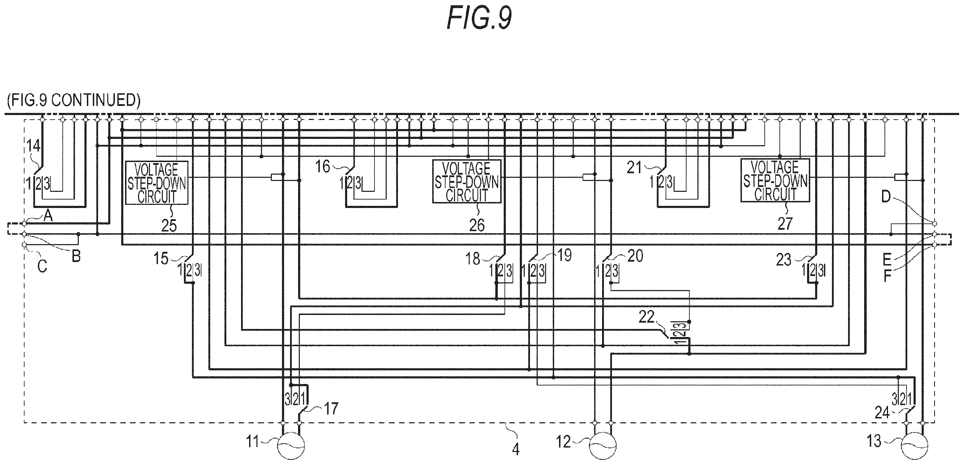

Fig. 9 is an internal circuit diagram of the interlock device and the circuit breakers of the group 502 in a case where the three groups 501, 502, and 503 exist, in which three circuit breakers are interlocked, as shown in Fig. 4.

Since the terminal A and the terminal B of the interlock device 4 of the group 502 are connected to the terminal D and the terminal E of the group 501, the terminal E and the terminal F are connected to the terminal B and the terminal C of the group 503.

Thus, the terminal A and the terminal B, and the terminal E and the terminal F are short-circuited as shown in Fig. 9. Current flows from the power source 107 of the interlock pattern display circuit 104 of the trip relay 101 of the circuit breaker 1 through the current limiting circuit 108 and the diode 114 to the left element of the LED 1A. In addition, current flows from the power source 107 through the current limiting circuit 108, the photo coupler 113, and the diode 115 to the right element of the LED 1A. In this manner, the LED 1A emits orange light. The diode 114 prevents malfunction due to a reverse voltage applied to the LEDs 1A, 1B, and 1C. In addition, the power source 107 is connected to the voltage applying circuit 111 and applies the gate voltage such that the FET 112 is turned on. However, a current is applied to the light emitting side of the photo coupler 113, the photo coupler 113 enters into an ON state such that a short circuit occurs between a collector and an emitter, no voltage is applied to a gate of the FET 112, and the FET 112 is turned off.

The interlock pattern display circuit 204 of the trip relay 201 of the circuit breaker 2 and the interlock pattern display circuit 304 of the trip relay 301 of the circuit breaker 3 have the same circuit configuration such that the LED 1A emits orange light.

The LED 1A corresponds to the LED 51 in Fig. 3 and the LED 51 emits orange light such that it is found out that the interlock pattern is the pattern 1 and belongs to the group 502.

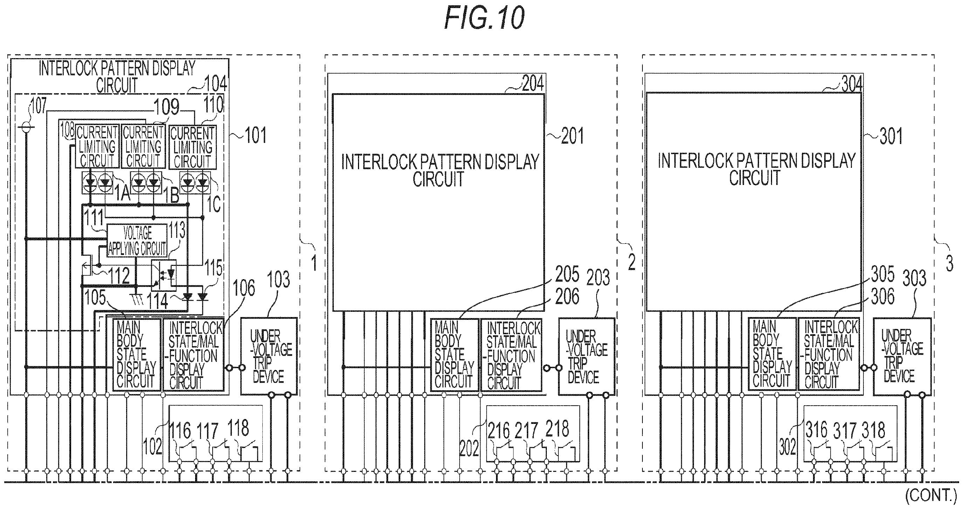

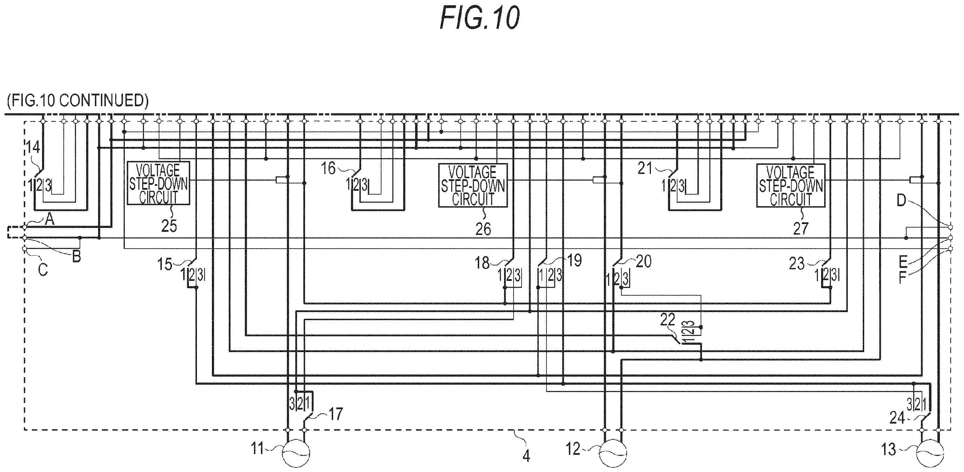

Fig. 10 is an internal circuit diagram of the interlock device and the circuit breakers of the group 503 in a case where the three groups 501, 502, and 503 exist, in which three circuit breakers are interlocked, as shown in Fig. 4.

Since the terminal A and the terminal B of the interlock device 4 of the group 503 are connected to the terminal D and the terminal E of the group 502, the terminal A and the terminal B are short-circuited as shown in Fig. 10. The power source 107 of the interlock pattern display circuit 104 of the trip relay 101 of the circuit breaker 1 is connected to the voltage applying circuit 111 and applies the gate voltage such that the FET 112 is turned on. Current flows from the power source 107 through the current limiting circuit 110, the FET 112, and the diode 114 to the left element of the LED 1A and the element emits green light.

The interlock pattern display circuit 204 of the trip relay 201 of the circuit breaker 2 and the interlock pattern display circuit 304 of the trip relay 301 of the circuit breaker 3 have the same circuit configuration such that the LED 1A emits green light.

The LED 1A corresponds to the LED 51 in Fig. 3 and the LED 51 emits green light such that it is found out that the interlock pattern is the pattern 1 and belongs to the group 503.

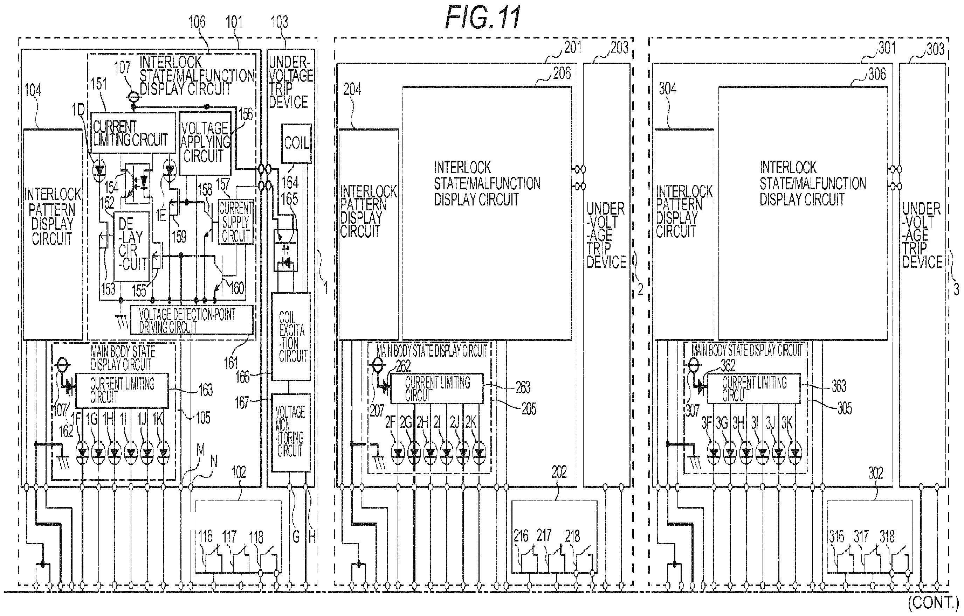

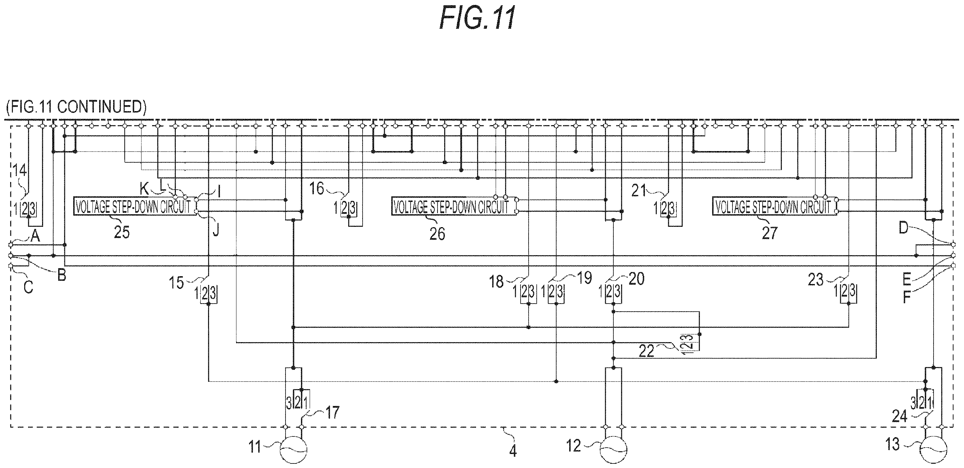

Fig. 11 shows the main body state display circuits 105, 205, and 305 and operations of the interlock state/malfunction display circuits 106, 206, and 306.

In Fig. 11, the LED 1F of the main body state display circuit 105 of the trip relay 101 of the circuit breaker 1, the LED 2F of the main body state display circuit 205 of the trip relay 201 of the circuit breaker 2, and the LED 3F of the main body state display circuit 305 of the trip relay 301 of the circuit breaker 3 correspond to the LED 54 in Fig. 3. In Fig. 11, the LED 1G of the main body state display circuit 105 of the trip relay 101 of the circuit breaker 1, the LED 2G of the main body state display circuit 205 of the trip relay 201 of the circuit breaker 2, and the LED 3G of the main body state display circuit 305 of the trip relay 301 of the circuit breaker 3 correspond to the LED 55 in Fig. 3. In Fig. 11, the LED 1H of the main body state display circuit 105 of the trip relay 101 of the circuit breaker 1, the LED 2H of the main body state display circuit 205 of the trip relay 201 of the circuit breaker 2, and the LED 3H of the main body state display circuit 305 of the trip relay 301 of the circuit breaker 3 correspond to the LED 56 in Fig. 3.

In addition, In Fig. 11, the LED 1I of the main body state display circuit 105 of the trip relay 101 of the circuit breaker 1, the LED 2I of the main body state display circuit 205 of the trip relay 201 of the circuit breaker 2, and the LED 3I of the main body state display circuit 305 of the trip relay 301 of the circuit breaker 3 correspond to the LED 57 in Fig. 3 . In Fig. 11, the LED 1J of the main body state display circuit 105 of the trip relay 101 of the circuit breaker 1, the LED 2J of the main body state display circuit 205 of the trip relay 201 of the circuit breaker 2, and the LED 3J of the main body state display circuit 305 of the trip relay 301 of the circuit breaker 3 correspond to the LED 58 in Fig. 3. In Fig. 11, the LED 1K of the main body state display circuit 105 of the trip relay 101 of the circuit breaker 1, the LED 2K of the main body state display circuit 205 of the trip relay 201 of the circuit breaker 2, and the LED 3K of the main body state display circuit 305 of the trip relay 301 of the circuit breaker 3 correspond to the LED 59 in Fig. 3.

Thick lines in Fig. 11 represent paths through which current flows in a state in which the circuit breaker 1, the circuit breaker 2, and the circuit breaker 3 are turned off. Current flows from the power source 107 of the main body state display circuit 105 of the trip relay 101 of the circuit breaker 1 through a diode 162 and a current limiting circuit 163 to the LED 1F and the LED 1F emits light. The diode 162 prevents malfunction due to a reverse voltage to the LED 1F, the LED 1G, the LED 1H, the LED 1I, the LED 1J, the LED 1K. The LED 1F corresponds to an LED 54 in Fig. 3 and the LED 54 emits light such that it is found out that the circuit breaker is the circuit breaker 1.

Current flows from a power source 207 of the main body state display circuit 205 of the trip relay 201 of the circuit breaker 2 through a diode 262 and a current limiting circuit 263 to the LED 2G and the LED 2G emits light.

The LED 2G corresponds to an LED 55 in Fig. 3 and the LED 55 emits light such that it is found out that the circuit breaker is the circuit breaker 2.

Current flows from a power source 307 of the main body state display circuit 305 of the trip relay 301 of the circuit breaker 3 through a diode 362 and a current limiting circuit 363 to the LED 3H and the LED 3H emits light.

The LED 3H corresponds to an LED 56 in Fig. 3 and the LED 56 emits light such that it is found out that the circuit breaker is the circuit breaker 3.

In Fig. 11, the interlock state/malfunction display circuits 106, 206, 306 and the undervoltage trip devices 103, 203, and 303 have the same circuit configuration. When current is applied to the terminal G and terminal H of the undervoltage trip device 103 from the electrical interlock device 4, a voltage monitoring circuit 167 causes a coil excitation circuit 166 to operate and a coil 164 is excited. An ON/OFF mechanism unit of the circuit breaker is locked such that the circuit breaker is turned off and locked when the coil 164 is not excited. However, when the coil 164 is excited, the mechanism unit is unlocked such that the circuit breaker is turned on. In addition, excitation current flows to the coil 164 and at the same time, and the coil excitation circuit 166 performs operation of causing a current to flow to the diode on the light emitting side such that a photo coupler 165 is turned on. A voltage is applied to the undervoltage trip device 103 from the electric interlock device 4 and at the same time, a voltage is applied to the terminal I and the terminal J of a voltage step-down circuit 25 and a signal voltage that is converted into a low voltage is applied to the terminal M and the terminal N of the trip relay 101 from the terminal K and the terminal L. When the signal voltage is applied to the terminal M and the terminal N of the trip relay 101, a voltage is applied to the gate such that the voltage detection-point drive circuit 161 of the interlock state/malfunction display circuit 106 turns on an FET 155. When the FET 155 is turned on, a current flows to the diode on the light emitting side of a photo coupler 154 through a current limiting circuit 151 from the power source 107 and the photo coupler 154 is turned on. When the photo coupler 154 is turned on, a current flows to a delay circuit 152 through a current limiting circuit 151 from the power source 107. Then, when three seconds of delay time elapses, a voltage is applied to the gate such that an FET 153 is turned on.

At this time, if the undervoltage trip device 103 performs a normal operation, the photo coupler 165 is turned on. Thus, a current flows to a current supply circuit 157 through the photo coupler 165 from the power source 107. When the current flows, the current supply circuit 157 causes the current to flow to a base terminal of transistor 158 and 160 and the transistor 158 and 160 are turned on. Since the voltage is applied to the terminal G and the terminal H of the undervoltage trip device 103, the photo coupler 165 is turned on and it takes about one second to turn on the transistor 158 and 160. However, since three seconds are the delay time of the delay circuit 152, the transistor 160 is turned on until the delay circuit 152 turns on the FET 153 and a short circuit occurs between the gate and a source of the FET 155 due to the transistor 160. The FET 155 is turned off and no current flows to the diode on the light emitting side of the photo coupler 154 and a cumulative time of the delay circuit 152 is reset to zero seconds and the FET 153 is not turned on.

However, although a voltage is applied to the terminal G and the terminal H due to an abnormal operation of the undervoltage trip device 103, no current flow to the current supply circuit 157 and the transistor 160 is not turned on in a case where no excitation current flows through the coil 164 and the photo coupler 165 is not turned on. When the transistor 160 is not turned on, the FET 155 stays in the ON state. Thus, the current is continuously applied to the delay circuit 152. After three seconds of delay time has elapsed, the voltage is applied to the gate of the FET 153, and the FET 153 is turned on. When the FET 153 is turned on, the current flows from the power source 107 through the current limiting circuit 151 to the LED 1D and the LED 1D emits light. The LED 1D corresponds to an LED 61 in Fig. 3 and, when the LED 61 emits light, it is determined that abnormal interlocking occurs. An operation of notifying the abnormal performance is performed not only immediately after the voltage is applied between the terminal G and the terminal H of the undervoltage trip device 103, but also continuously by continuous applying of the voltage between the terminal G and the terminal H. Even in a case where an abnormal operation of the undervoltage trip device 103 is found after a normal operation is performed and the photo coupler 165 is turned off, the current to the current supply circuit 157 is cut off, the transistor 160 is turned off, and the FET 155 is turned on by the voltage detection-point drive circuit 161. Then, the moment three seconds of the delay time of the delay circuit 152 elapsed, the FET 153 is turned on and the LED 1D emits light.

In addition, when the voltage is applied to the voltage applying circuit 156 from the power source 107, the voltage applying circuit 156 applies the voltage to a gate of a FET 159 and the FET 159 is turned on. When the FET 159 is turned on, the current flows from the power source 107 through the current limiting circuit 151 to the LED 1E and the LED 1E emits light.

The LED 1E corresponds to an LED 60 in Fig. 3. The LED 60 emits light, thereby, no voltage is applied to the undervoltage trip device of the circuit breaker, and it is found out that the circuit breaker is turned off and locked.

As described above, when the voltage is applied to the terminal G and the terminal H of the undervoltage trip device 103, the photo coupler 165 is turned on, the current flows to the current supply circuit 157, and the transistor 158 is turned on. A short circuit occurs between the gate and a source of the FET 159 by the transistor 158, the FET 159 is turned off, and the current to the LED 1E is cut off such that the LED 1E turns off the light. Since the LED 1E corresponds to an LED 60 in Fig. 3, the voltage is applied to the undervoltage trip device of the circuit breaker by turning off the light of the LED 60 and it is found out that the circuit breaker can be turned on.

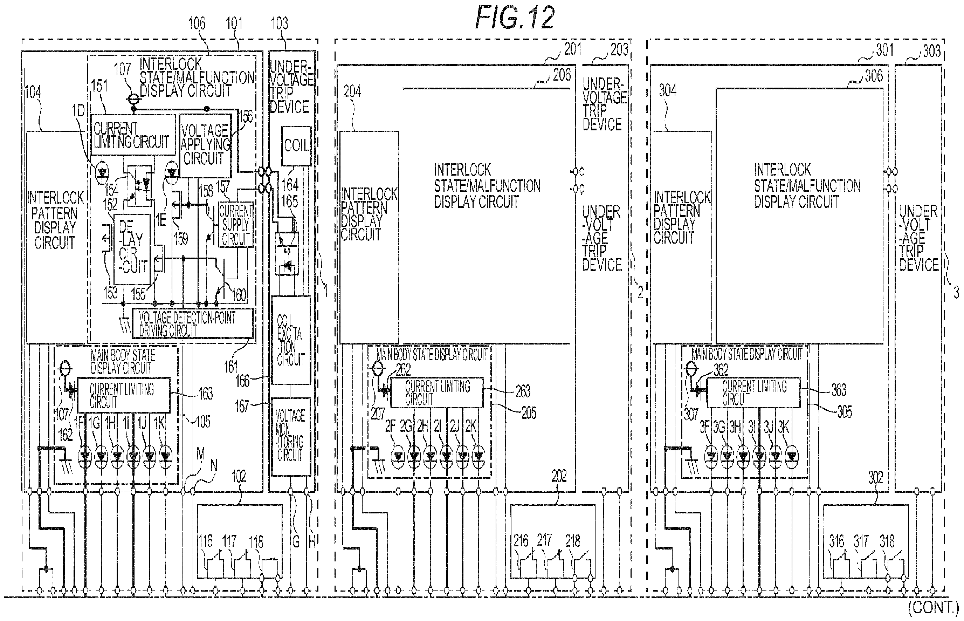

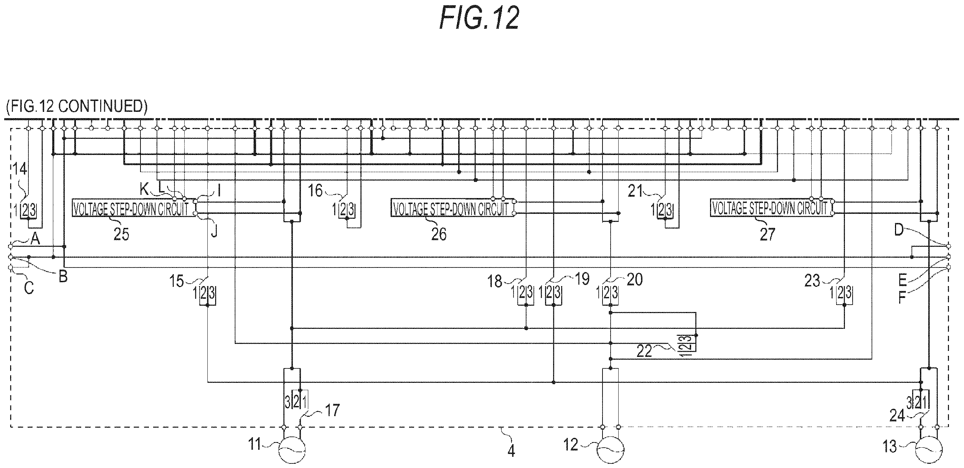

Fig. 12 is an internal circuit diagram of the interlock device and the circuit breaker in a case where the circuit breaker 1 is turned on. Thick lines in Fig. 12 represent paths through which a current flows in a state in which the circuit breaker 1 is turned on and the circuit breaker 2 and the circuit breaker 3 are turned off. When the circuit breaker 1 is turned on, the switch 118 of the auxiliary switch 102 is turned on. When the switch 118 is turned on, the current flows from the power source 107 of the main body state display circuit 105 through the diode 162 and the current limiting circuit 163 to the LED 1I and the LED 1I emits light. Similarly, the current flows from the power source 207 of the main body state display circuit 205 of the circuit breaker 2 through the diode 262 and the current limiting circuit 263 to the LED 2I and the LED 2I emits light, and the current flows from the power source 307 of the main body state display circuit 305 of the circuit breaker 3 through the diode 362 and the current limiting circuit 363 to the LED 3I and the LED 3I emits light. Since the LEDs 1I, 21, and 3I correspond to the LED 57 in Fig. 3, the LED 57 emits light and thereby, it is found out that the circuit breaker 1 is turned on.

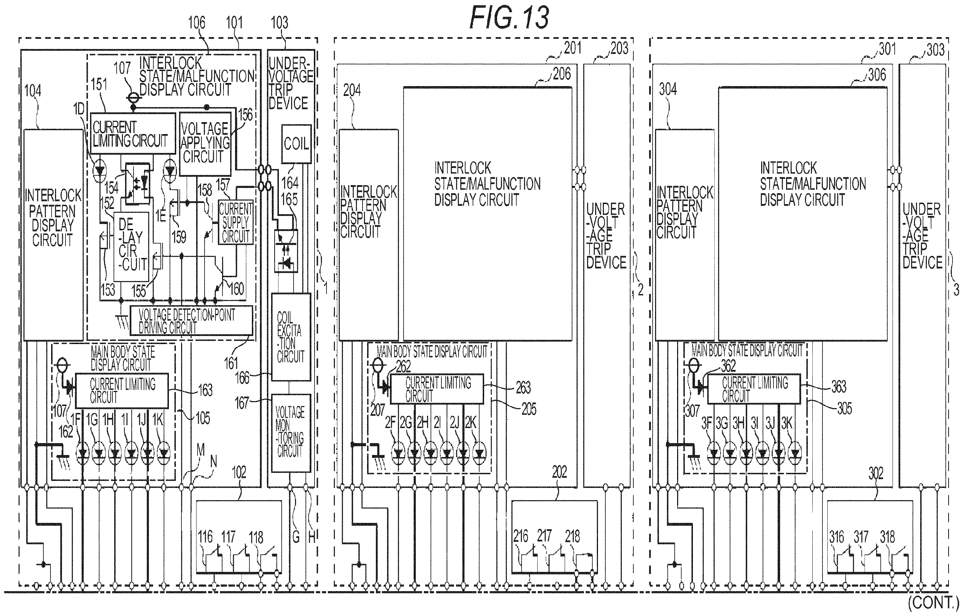

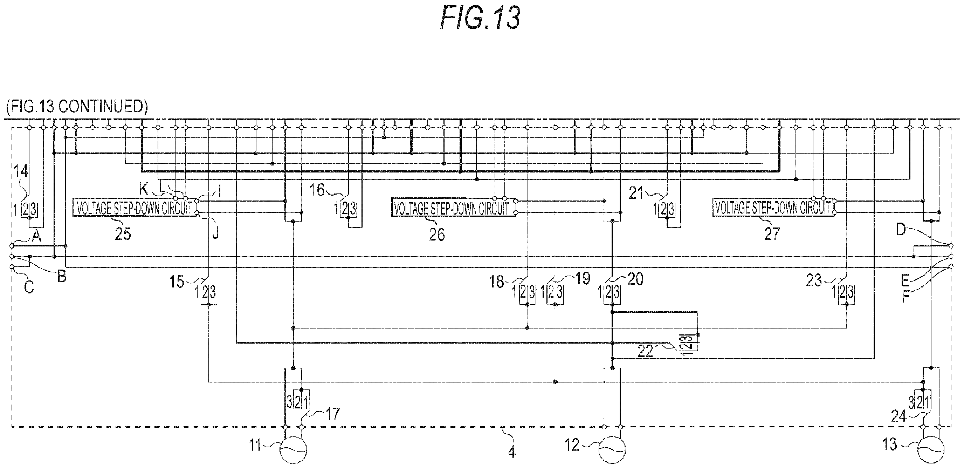

Fig. 13 is an internal circuit diagram of the interlock device and the circuit breaker in a case where the circuit breaker 2 is turned on. Thick lines in Fig. 13 represent paths through which a current flows in a state in which the circuit breaker 2 is turned on and the circuit breaker 1 and the circuit breaker 3 are turned off. When the circuit breaker 2 is turned on, the switch 218 of the auxiliary switch 202 is turned on. When the switch 218 is turned on, the current flows from the power source 207 of the main body state display circuit 205 through the diode 262 and the current limiting circuit 263 to the LED 2J and the LED 2J emits light. Similarly, the current flows from the power source 107 of the main body state display circuit 105 of the circuit breaker 1 through the diode 162 and the current limiting circuit 163 to the LED 1J and the LED 1J emits light, and the current flows from the power source 307 of the main body state display circuit 305 of the circuit breaker 3 through the diode 362 and the current limiting circuit 363 to the LED 3J and the LED 3J emits light. Since the LEDs 1J, 2J, and 3J correspond to the LED 58 in Fig. 3, the LED 58 emits light and thereby, it is found out that the circuit breaker 2 is turned on.

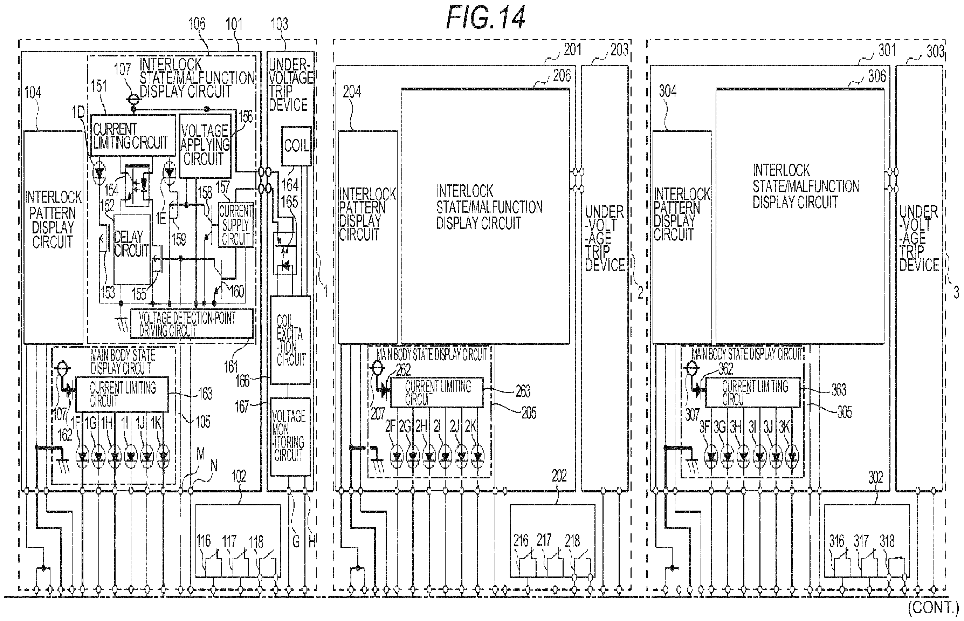

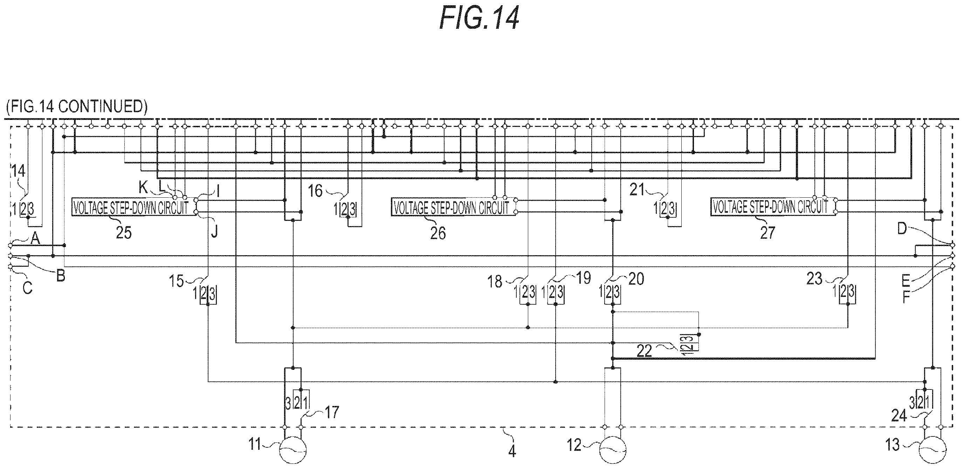

Fig. 14 is an internal circuit diagram of the interlock device and the circuit breaker in a case where the circuit breaker 3 is turned on. Thick lines in Fig. 14 represent paths through which a current flows in a state in which the circuit breaker 3 is turned on and the circuit breaker 1 and the circuit breaker 2 are turned off. When the circuit breaker 3 is turned on, the switch 318 of the auxiliary switch 302 is turned on. When the switch 318 is turned on, the current flows from the power source 307 of the main body state display circuit 305 through the diode 362 and the current limiting circuit 363 to the LED 3K and the LED 3K emits light. Similarly, the current flows from the power source 107 of the main body state display circuit 105 of the circuit breaker 1 through the diode 162 and the current limiting circuit 163 to the LED 1K and the LED 1K emits light, and the current flows from the power source 207 of the main body state display circuit 205 of the circuit breaker 2 through the diode 262 and the current limiting circuit 263 to the LED 2K and the LED 2K emits light. Since the LEDs 1K, 2K, and 3K correspond to an LED 59 in Fig. 3, the LED 59 emits light and thereby, it is found out that the circuit breaker 3 is turned on.

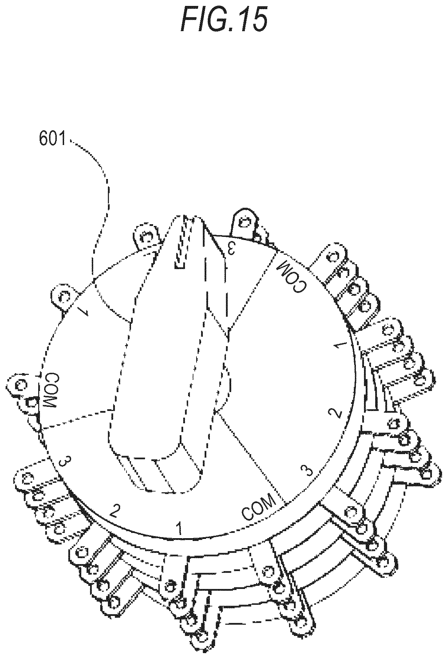

Fig. 15 is a view of a configuration of the switches 14 to 24 in Fig. 5 to Fig. 14, which are linked to the switching of the pattern selector switch 5 in Fig. 1 and perform switching to the same pattern. The switch has three circuits and three contacts at the first level. Since the switch has a four-level configuration, twelve circuits and three contacts can be switched at the same time. A trimmer 601 corresponding to the pattern selector switch 5 in Fig. 1 is switched and thereby, internal contact corresponding to the switches 14 to 24 in Fig. 5 to Fig. 14 are switched at the same time such that it is possible to switch the interlock pattern.

As described above, Embodiment 1 of the invention achieves an advantageous effect in that a wire for group sorting check is added between the interlock devices such that it is possible to display interlock group sorting on the circuit breaker main body, at the same time, linking to the interlock pattern switching makes it possible to perform the interlock pattern display, the state display of the circuit breaker as the interlock counterpart, the interlock operation/release display, and the interlock malfunction display.

### Embodiment 2

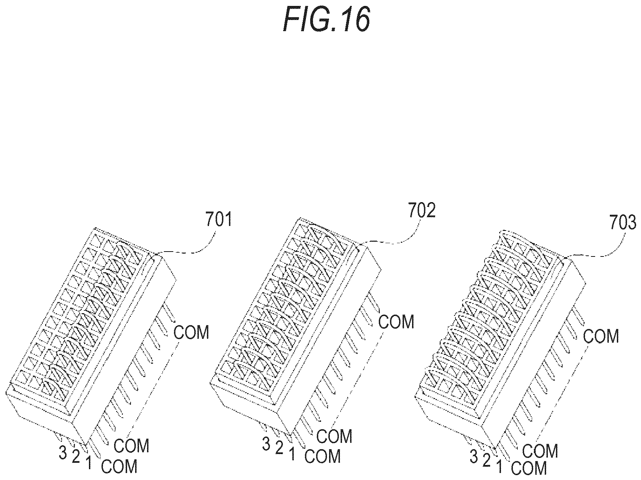

Fig. 16 is a view of using a connector instead of the selector switch in Fig. 15 according to Embodiment 2 of the invention.

According to the present embodiment, since the connector is used instead of the switch that can switch twelve circuits and three contacts in Fig. 15 according to Embodiment 1 at the same time, the interlock pattern becomes a wire of the pattern 1 by inserting a male connector 701 in which a short circuit occurs between a common terminal and a first terminal in a case where the interlock pattern is the pattern 1. In a case where the interlock pattern is the pattern 2, the interlock pattern becomes a wire of the pattern 2 by inserting a male connector 702 in which a short circuit occurs between the common terminal and a second terminal. In a case where the interlock pattern is the pattern 3, the interlock pattern becomes a wire of the pattern 3 by inserting a male connector 703 in which a short circuit occurs between the common terminal and a third terminal.

According to the present embodiment, since the switch having multiple contacts for switching of the interlock pattern is not used, no pattern switching defect due to wear of the switch contact is found and it is possible to enhance reliability compared to the case of using the switch.

As clear in the description described above and also in the drawings described above, Embodiment 1 has the following technical features.

Feature Point 1A: The interlock device and the circuit breaker include pattern selector means of the electrical interlocking of the three circuit breakers and pattern display means and display means for interlock.

Feature Point 2A: The interlock device and the circuit breaker according to the feature point 1A include state display means of the circuit breakers as the electrical interlock counterpart of the three circuit breakers.

Feature Point 3A: The interlock device and the circuit breaker according to the feature point 1A include display means of showing electrical interlock operation and release of the three circuit breakers.

Feature Point 4A: The interlock device and the circuit breaker according to the feature point 1A include malfunction display means of the electrical interlocking of the three circuit breakers.

Feature Point 5A: In a case where a plurality of groups exist, in which the circuit breakers are electrically interlocked by the interlock device, the interlock device and the circuit breaker include means for displaying which circuit breaker belongs to which interlock group.

Feature Point 6A: The interlock device and the circuit breaker are provided, in which the auxiliary switch 102 and the undervoltage trip device 103 of the circuit breaker 1, the auxiliary switch 202 and the undervoltage trip device 203 of the circuit breaker 2, and the auxiliary switch 302 and the undervoltage trip device 303 of the circuit breaker 3 are connected to the interlock device 4 such that the interlocking can be performed, the switches 14 to 24 of the interlock device 4 has a function of linking to the switching of the interlock pattern selector switch and switching to the same pattern, the LEDs 1A, 1B, and 1C of the interlock pattern display circuit 104 of the circuit breaker 1 emits green light in a case where the current is applied to the left element in the two-element LED, emit red light in a case where the current is applied to the right element, and emit orange light in a case where the current is applied to both the right and left elements, the means is provided for displaying of which interlock group the circuit breaker 1 belongs to by changing the light color depending on the interlock group to which the circuit breaker 1 belongs, and the means is provided for displaying of which interlock group the circuit breaker 2 belongs to by the interlock pattern display circuit 204 and displaying of which interlock group the circuit breaker 3 belongs to the interlock pattern display circuit 304.

Feature Point 7A: The wire for group sorting check is added between the interlock devices such that it is possible to display group sorting of the interlock on the circuit breaker main body, at the same time, linking to the interlock pattern switching makes it possible to perform the interlock pattern display, the state display of the circuit breaker as the interlock counterpart, the interlock operation/release display, and the interlock malfunction display.

Feature Point 1B: An interlock display system of a circuit breaker includes a plurality of groups, each of which is configured to include at least three circuit breakers which are electrically interlocked in a relative manner and an interlock device that sets matching patterns as interlock targets of the three circuit breakers, and a plurality of the interlock devices are connected with a wire between the groups, in which an interlock display section that displays an interlocked state of the circuit breakers in the group thereof is provided for each of the circuit breakers, and a type of pattern and a type of group are displayed on the interlock display section.

Feature Point 2B: In the interlock display system of a circuit breaker according to the feature point 1B, the type of group is identified using the LED.

Feature Point 3B: In the interlock display system of a circuit breaker according to the feature point 1B or the feature point 2B, an operation state of the circuit breaker as the interlock counterpart of the circuit breaker is displayed on the interlock display section.

Feature Point 4B: In the interlock display system of a circuit breaker according to the feature point 1B or the feature point 2B, an interlock operation/release display is performed on the interlock display section.

Feature Point 5B: In the interlock display system of a circuit breaker according to the feature point 1B or the feature point 2B, an interlock malfunction display is performed on the interlock display section.

Feature Point 6B: In the interlock display system of a circuit breaker according to the feature point 1B or the feature point 2B, an operation state of the circuit breaker as the interlock counterpart of the circuit breaker is displayed on the interlock display section, and an interlock operation/release display is performed on the interlock display section.

Feature Point 7B: In the interlock display system of a circuit breaker according to the feature point 1B or the feature point 2B, an operation state of the counterpart circuit breaker of the interlock of the circuit breaker is displayed on the interlock display section, and an interlock malfunction display is performed on the interlock display section.

Feature Point 8B: In the interlock display system of a circuit breaker according to the feature point 1B or the feature point 2B, an interlock operation/release display and an interlock malfunction display are performed on the interlock display section.

Feature Point 9B: In the interlock display system of a circuit breaker according to the feature point 1B or the feature point 2B, an operation state of the circuit breaker as the interlock counterpart of the circuit breaker is displayed on the interlock display section, and the interlock operation/release display and the interlock malfunction display are performed on the interlock display section.

Feature Point 10B: A circuit breaker in a plurality of groups, each of which is configured to include at least three circuit breakers which are electrically interlocked in a relative manner and an interlock device that sets matching patterns as interlock targets of the three circuit breakers and a plurality of the interlock devices are connected with a wire between the groups, the circuit breaker includes: the interlock display section that displays an interlocked state of the circuit breakers in the group thereof, in which a type of pattern and a type of group are displayed on the interlock display section.

Feature Point 11B: In the circuit breaker according to the feature point 10B, the type of group is identified using an LED.

Feature Point 12B: In the circuit breaker according to the feature point 10B or the feature point 11B, an operation state of the circuit breaker as the interlock counterpart is displayed on the interlock display section.

Feature Point 13B: In the circuit breaker according to the feature point 10B or the feature point 11B, an interlock operation/release display is performed on the interlock display section.

Feature Point 14B: In the circuit breaker according to the feature point 10B or the feature point 11B, an interlock malfunction display is performed on the interlock display section.

Feature Point 15B: In the circuit breaker according to the feature point 10B or the feature point 11B, an operation state of the circuit breaker as the interlock counterpart is displayed on the interlock display section, and the interlock operation/release is performed on the interlock display section.

Feature Point 16B: In the circuit breaker according to the feature point 10B or the feature point 11B, an operation state of the circuit breaker of the interlock counterpart is displayed on the interlock display section, and an interlock malfunction display is performed on the interlock display section.

Feature Point 17B: In the circuit breaker according to the feature point 10B or the feature point 11B, an interlock operation/release display and an interlock malfunction display are performed on the interlock display section.

Feature Point 18B: In the circuit breaker according to the feature point 10B or the feature point 11B, an operation state of the circuit breaker as the interlock counterpart is displayed on the interlock display section, and an interlock operation/release display and an interlock malfunction display are performed on the interlock display section.

In Fig. 1 to Fig. 16, the same reference signs represent the same or corresponding portion.

According to the present invention, the embodiments can be appropriately modified, omitted, or combined within the scope of the invention.

### Reference Signs List

- 1: circuit breaker
- 2: circuit breaker
- 3: circuit breaker
- 4: interlock device
- 5: pattern selector switch
- 6: interlock display section
- 11: power source
- 12: power source
- 13: power source
- 14: switch
- 15: switch
- 16: switch
- 17: switch
- 18: switch
- 19: switch
- 20: switch
- 21: switch
- 22: switch
- 23: switch
- 24: switch
- 1F: LED
- 1G: LED
- 1H: LED
- 1I: LED
- 1J: LED
- 1K: LED
- 2F: LED
- 2G: LED
- 2H: LED
- 2I: LED
- 2J: LED
- 2K: LED
- 3F: LED
- 3G: LED
- 3H: LED
- 31: LED
- 3J: LED
- 3K: LED
- 25: voltage step-down circuit
- 26: voltage step-down circuit
- 27: voltage step-down circuit
- 51: pattern display
- 52: pattern display
- 53: pattern display
- 54: corresponding main body display
- 55: corresponding main body display
- 56: corresponding main body display
- 57: circuit breaker main body-on display
- 58: circuit breaker main body-on display
- 59: circuit breaker main body-on display
- 60: operation display
- 61: malfunction display
- 101: trip relay
- 102: auxiliary switch
- 103: undervoltage trip device
- 104: interlock pattern display circuit
- 105: main body state display circuit
- 106: malfunction display circuit
- 107: power source
- 108: current limiting circuit
- 109: current limiting circuit
- 110: current limiting circuit
- 111: voltage applying circuit
- 112: FET
- 113: photo coupler
- 114: diode
- 115: diode
- 116: switch
- 117: switch
- 118: switch
- 151: current limiting circuit
- 152: delay circuit
- 153: FET
- 154: photo coupler
- 155: FET
- 156: voltage applying circuit
- 157: current supply circuit
- 158: transistor
- 159: FET
- 160: transistor
- 161: voltage detection-point drive circuit
- 162: diode
- 163: current limiting circuit
- 164: coil
- 165: photo coupler
- 166: coil excitation circuit
- 167: voltage monitoring circuit
- 201: trip relay
- 202: auxiliary switch
- 203: undervoltage trip device
- 204: interlock pattern display circuit
- 205: main body state display circuit
- 206: malfunction display circuit
- 216: switch
- 217: switch
- 218: switch
- 262: diode
- 263: current limiting circuit
- 301: trip relay
- 302: auxiliary switch
- 303: undervoltage trip device
- 304: interlock pattern display circuit
- 305: main body state display circuit
- 306: malfunction display circuit
- 316: switch
- 317: switch
- 318: switch
- 362: diode
- 363: current limiting circuit
- 501: group
- 502: group
- 503: group
- A: terminal
- B: terminal
- C: terminal
- C: terminal
- E: terminal
- F: terminal
- G: terminal
- H: terminal
- I: terminal
- J: terminal
- K: terminal
- L: terminal
- M: terminal
- N: terminal

## Claims

1. An interlock display system, comprising:
a plurality of groups (501, 502, 503) of at least three circuit breakers (1, 2, 3), wherein each group (501, 502, 503) is configured to include at least three circuit breakers (1, 2, 3) which are electrically interlocked in a relative manner and an interlock device (4) that sets matching patterns as interlock targets of the three circuit breakers (1, 2, 3),
wherein a plurality of the interlock devices (4) are connected with a wire between the groups (501, 502, 503),
wherein an interlock display section (6) is provided for each circuit breaker (1, 2, 3), the interlock display section (6) being adapted to display an interlock state of the circuit breakers (1, 2, 3) in the group (501, 502, 503), and
wherein a type of pattern and a type of group (501, 502, 503) are displayed on the interlock display section (6).

2. The interlock display system according to Claim 1, wherein the type of group (501, 502, 503) is identified using an LED.

3. The interlock display system according to Claim 1 or 2, wherein an operation state of the circuit breaker as the interlock counterpart is displayed on the interlock display section (6).

4. The interlock display system according to Claim 1 or 2, wherein an interlock operation/release display is performed on the interlock display section (6).

5. The interlock display system according to Claim 1 or 2, wherein an interlock malfunction display is performed on the interlock display section (6).

6. The interlock display system according to Claim 1 or 2,
wherein an operation state of the circuit breaker as the interlock counterpart is displayed on the interlock display section (6), and
wherein an interlock operation/release display is performed on the interlock display section (6).

7. The interlock display system according to Claim 1 or 2,
wherein an operation state of the circuit breaker as the interlock counterpart is displayed on the interlock display section (6), and
wherein an interlock malfunction display is performed on the interlock display section (6).

8. The interlock display system according to Claim 1 or 2, wherein an interlock operation/release display and an interlock malfunction display are performed on the interlock display section (6).

9. The interlock display system according to Claim 1 or 2,
wherein an operation state of the circuit breaker as the interlock counterpart is displayed on the interlock display section (6), and
wherein an interlock operation/release display and a interlock malfunction display are performed on the interlock display section (6).

## Patentansprüche

1. Verriegelungsanzeigesystem, umfassend:
eine Mehrzahl von Gruppen (501, 502, 503) von mindestens drei Leistungsschaltern (1, 2, 3), wobei jede Gruppe (501, 502, 503) ausgebildet ist, mindestens drei Leistungsschalter (1, 2, 3), die elektrisch in Abhängigkeit voneinander verriegelt sind, und eine Verriegelungsvorrichtung (4), die passende Muster als Verriegelungsziele der drei Leistungsschalter (1, 2, 3) einstellt, umfasst,
wobei eine Mehrzahl der Verriegelungsvorrichtungen (4) mit einem Draht zwischen den Gruppen (501, 502, 503) verbunden sind,
wobei für jeden Leistungsschalter (1, 2, 3) ein Verriegelungsanzeige-Abschnitt (6) vorgesehen ist, wobei der Verriegelungsanzeige-Abschnitt (6) dazu ausgebildet ist, einen Verriegelungszustand der Leistungsschalter (1, 2, 3) in der Gruppe (501, 502, 503) anzuzeigen, und
wobei ein Mustertyp und ein Gruppentyp (501, 502, 503) in dem Verriegelungsanzeige-Abschnitt (6) angezeigt werden.

2. Verriegelungsanzeigesystem nach Anspruch 1, wobei der Gruppentyp (501, 502, 503) mittels einer LED identifiziert wird.

3. Verriegelungssystem nach Anspruch 1 oder 2, wobei ein Betriebszustand des Leistungsschalters als Gegenstück der Verriegelung in dem Verriegelungsanzeige-Abschnitt (6) angezeigt wird.

4. Verriegelungsanzeigesystem nach Anspruch 1 oder 2, wobei in dem Verriegelungsanzeige-Abschnitt (6) eine Anzeige einer Verriegelungs-Betätigung-/Freigabe durchgeführt wird.

5. Verriegelungssystem nach Anspruch 1 oder 2, wobei in dem Verriegelungsanzeige-Abschnitt (6) eine Anzeige einer Verriegelungs-Störung durchgeführt wird.

6. Verriegelungsanzeigesystem nach Anspruch 1 oder 2,
wobei ein Betriebszustand des Leistungsschalters als Gegenstück der Verriegelung in dem Verriegelungsanzeige-Abschnitt (6) angezeigt wird, und wobei eine Anzeige einer Verriegelungs-Betätigung-/Freigabe in dem Verriegelungsanzeige-Abschnitt (6) durchgeführt wird.

7. Verriegelungsanzeigesystem nach Anspruch 1 oder 2,
wobei ein Betriebszustand des Leistungsschalters als Gegenstück der Verriegelung in dem Verriegelungsanzeige-Abschnitt (6) angezeigt wird, und wobei eine Anzeige einer Verriegelungs-Störung in dem Verriegelungsanzeige-Abschnitt (6) durchgeführt wird.

8. Verriegelungsanzeigesystem nach Anspruch 1 oder 2, wobei im Verriegelungsanzeige-Abschnitt (6) eine Anzeige einer Verriegelungs-Betätigung-/Freigabe und eine Anzeige einer Verriegelungs-Störung durchgeführt werden.

9. Verriegelungsanzeigesystem nach Anspruch 1 oder 2,
wobei ein Betriebszustand des Leistungsschalters als Gegenstück der Verriegelung in dem Verriegelungsanzeige-Abschnitt (6) angezeigt wird, und wobei eine Anzeige einer Verriegelungs-Betätigung-/Freigabe und eine Anzeige einer Verriegelungs-Störung in dem Verriegelungsanzeige-Abschnitt (6) durchgeführt werden.

## Revendications

1. Système d'affichage de verrouillage mutuel, comprenant :
une pluralité de groupes (501, 502, 503) d'au moins trois disjoncteurs (1, 2, 3), dans lequel chaque groupe (501, 502, 503) est configuré pour contenir au moins trois disjoncteurs (1, 2, 3) qui sont électriquement verrouillés mutuellement de manière relative, et un dispositif de verrouillage mutuel (4) qui fixe des modèles d'adaptation comme cibles de verrouillage mutuel des trois disjoncteurs (1, 2, 3),
dans lequel une pluralité des dispositifs de verrouillage mutuel (4) sont reliés avec un fil entre les groupes (501, 502, 503),
dans lequel une section d'affichage de verrouillage mutuel (6) est prévue pour chaque disjoncteur (1, 2, 3), la section d'affichage de verrouillage mutuel (6) étant adaptée pour afficher un état de verrouillage mutuel des disjoncteurs (1, 2, 3) dans le groupe (501, 502, 503), et
dans lequel un type de modèle et un type de groupe (501, 502, 503) sont affichés sur la section d'affichage de verrouillage mutuel (6).

2. Système d'affichage de verrouillage mutuel selon la revendication 1, dans lequel le type de groupe (501, 502, 503) est identifié à l'aide d'une LED.

3. Système d'affichage de verrouillage mutuel selon la revendication 1 ou 2, dans lequel un état de fonctionnement du disjoncteur comme élément opposé de verrouillage mutuel est affiché sur la section d'affichage de verrouillage mutuel (6).

4. Système d'affichage de verrouillage mutuel selon la revendication 1 ou 2, dans lequel un affichage d'actionnement/de déblocage de verrouillage mutuel est réalisé sur la section d'affichage de verrouillage mutuel (6).

5. Système d'affichage de verrouillage mutuel selon la revendication 1 ou 2, dans lequel un affichage de dysfonctionnement de verrouillage mutuel est réalisé sur la section d'affichage de verrouillage mutuel (6).

6. Système d'affichage de verrouillage mutuel selon la revendication 1 ou 2,
dans lequel un état de fonctionnement du disjoncteur comme élément opposé de verrouillage mutuel est affiché sur la section d'affichage de verrouillage mutuel (6), et
dans lequel l'affichage d'actionnement/de déblocage de verrouillage mutuel est réalisé sur la section d'affichage de verrouillage mutuel (6).

7. Système d'affichage de verrouillage mutuel selon la revendication 1 ou 2,
dans lequel un état de fonctionnement du disjoncteur comme élément opposé de verrouillage mutuel est affiché sur la section d'affichage de verrouillage mutuel (6), et
dans lequel un affichage de dysfonctionnement de verrouillage mutuel est réalisé sur la section d'affichage de verrouillage mutuel (6).

8. Système d'affichage de verrouillage mutuel selon la revendication 1 ou 2, dans lequel un affichage d'actionnement/de déblocage de verrouillage mutuel et un affichage de dysfonctionnement de verrouillage mutuel sont réalisés sur la section d'affichage de verrouillage mutuel (6).

9. Système d'affichage de verrouillage mutuel selon la revendication 1 ou 2,
dans lequel un état de fonctionnement de verrouillage mutuel du disjoncteur comme élément opposé de verrouillage mutuel est affiché sur la section d'affichage de verrouillage mutuel (6), et
un affichage d'actionnement/de déblocage de verrouillage mutuel et un affichage de dysfonctionnement de verrouillage mutuel sont réalisés sur la section d'affichage de verrouillage mutuel (6).
